# EUROPEAN PATENT SPECIFICATION

(11) **EP 1 565 691 B1**
(45) Date of publication and mention of the grant of the patent: **02.07.2008**
(21) Application number: 03811731.3
(22) Date of filing: 16.04.2003
(51) Int. Cl.: F24D 13/02, E04F 15/04

(54) **HEATED FLOOR PANEL**
BEHEIZTE BODENPLATTE
PANNEAU DE SOL CHAUFFANT

(30) Priority: 25.11.2002 DE 20218331 U
(43) Date of publication of application: 24.08.2005
(73) Proprietor: BERRY FINANCE NV, 8780 Oostrozebeke (BE)
(72) Inventor: BARTNES, Tor, Gunnar, N-4517 Mandal (NO)
(74) Representative: Grünecker, Kinkeldey, Stockmair & Schwanhäusser Anwaltssozietät
(86) International application number: PCT/EP2003/003999
(87) International publication number: WO 2004/048854

(56) References cited:
- EP-A- 0 543 589
- PATENT ABSTRACTS OF JAPAN vol. 1996, no. 12, 26 December 1996 (1996-12-26) & JP 08 218608 A (DOMUSU SEKKEI JIMUSHO:KK), 27 August 1996 (1996-08-27)
- PATENT ABSTRACTS OF JAPAN vol. 2002, no. 04, 4 August 2002 (2002-08-04) & JP 2001 336773 A (EIDAI CO LTD), 7 December 2001 (2001-12-07)
- PATENT ABSTRACTS OF JAPAN vol. 2000, no. 13, 5 February 2001 (2001-02-05) & JP 2000 303671 A (MATSUSHITA ELECTRIC WORKS LTD), 31 October 2000 (2000-10-31)
- PATENT ABSTRACTS OF JAPAN vol. 014, no. 384 (M-1013), 20 August 1990 (1990-08-20) & JP 02 144453 A (SANYO KOKUSAKU PULP CO LTD), 4 June 1990 (1990-06-04)

## Description

The present invention relates to a floor panel as defined in the preamble of claim 1.

A floor panel of this type is disclosed in JP-A-08-218608. The floor panel includes a surface tread layer made of a wooden plate, arranged above a core of sufficient thickness to provide rigidity to the floor panel. Heating means are arranged between the upper tread plate of wood and the core heating means. This arrangement of the heating means requires a wooden plate to protect the heating means.

It is an object of the present invention to provide a design for a floor panel which does not necessarily require a wooden plate to form the tread surface.

Floor panels are further described in WO94/26999 or in WO97/47834. These floor panels are adapted for easy laying also by unskilled persons. They have a handy size and usually a rectangular shape and their side edges are provided with elements of a panel connection through which each panel can be connected with its adjoining panels to form a closed surface compound, preferably via a snap or latch connection. These panel connections are adapted such that they ensure a closed, undisplaceable connection between the panels also by an unskilled user and without the use of additional tools.

Floor panels are particularly suitable for being laid over a floor heating. Floor heatings and the floor coverings formerly had to be laid by skilled labor.

The object of the invention is to provide a floor panel by means of which also an unskilled user can lay a floor heating.

This object is solved by the features defined in claim 1.

By means of the embodiment according to the invention, the floor heating may also be laid together with the floor panel so that skilled labor is no longer required for laying the floor heating.

Advantageous embodiments of the invention can be derived from the subclaims.

It is particularly advantageous to cover the heating means towards the outside with a backing, which on the one hand offers a certain protection of the heating means, and which on the other hand can at the same time serve as sound and heat insulation.

Resistance heating foils available on the market are particularly suitable as heating means, since these foils do not substantially enlarge the height of the floor panel and are therefore not an obstacle against being laid underneath the doors etc.

Plug elements may be used as heating connectors. These plug elements ensure a very simple connection easy to be made by unskilled users between the heating means of the different floor panels.

The plug elements are preferably made of a flexible material, which further facilitates laying.

An embodiment of the invention will now be explained by means of the drawings.
Fig. 1 shows a schematic, perspective view of a floor panel according to the invention,
Fig. 2 shows a side view of a floor panel according to the invention, partially cut, to show the layer structure,
Fig. 3 shows the section III-III of Fig. 2,
Fig. 4 shows a schematic view of a heating material,
Fig. 5 shows a schematic view of a first embodiment of a plug element,
Fig. 6 shows a schematic view of a second embodiment of a plug element, and
Fig. 7 shows a schematic view of a further embodiment of a plug element.

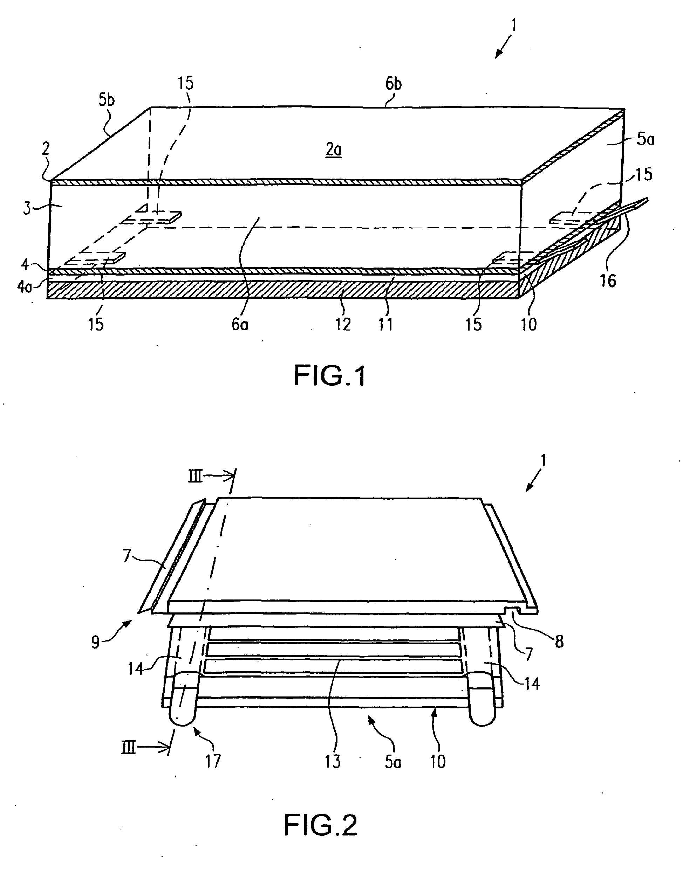

A first embodiment of a floor panel 1 can be seen in schematic view in Fig. 1, which is excessively thick for illustration reasons compared to its normal dimensions. The floor panel 1 in the embodiment shown is formed as a laminate and has a tread layer 2 with an upwardly pointing decoration or tread surface 2a, a core 3 and a floor layer 4 with a downwardly pointing floor surface 4a. The materials for the layers are common and not limited for the purposes of the present invention. The tread layer 2 may consist of a wood or wood veneer layer, a decoration layer or the like. The core may consist of solid wood or wood construction materials, such as high-density or middle-dense fiber boards. The bottom layer is not necessarily required, i.e. the bottom surface 4a may also be formed by the core.

In the embodiment shown, the floor panel 1 has the usual, rectangular plank-like shape with two opposing short side edges 5a and 5b and two long side edges 6a and 6b. The size of the floor panel 1 usually lies within a width of e.g. 10 to 25 cm and a length of 50 to 100 cm, i.e. the dimensions of the floor panel are chosen such that an unskilled user can also easily handle the floor panels.

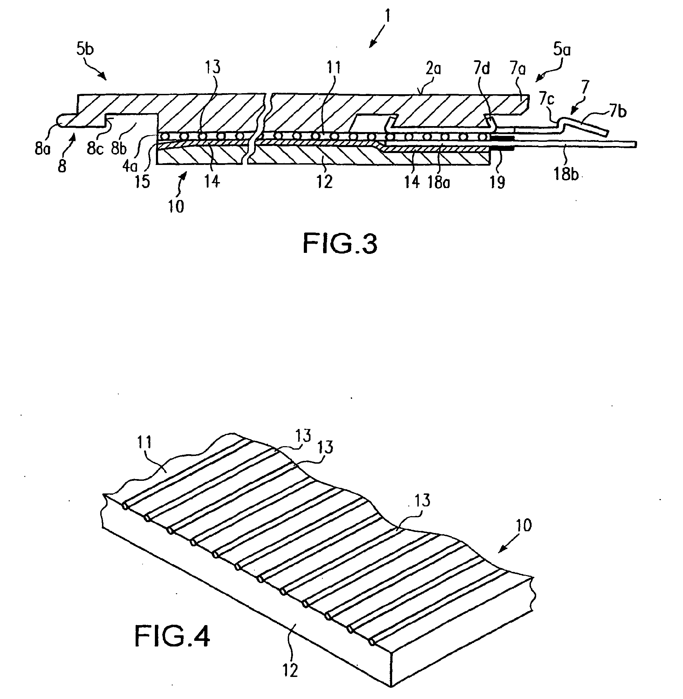

The circumferential side edges 5 and 6 are, which is not shown in Fig. 1, provided with positive and negative elements 7, 8 (Fig. 2 and 3) of an interlocking panel connection 9, which preferably forms one of the conventional mechanical snap or latch connection. In the embodiment shown according to Fig. 2, the panel connectors 9 are provided on the opposing short side edges 5a, 5b as well as on the opposing long side edges 6a, 6b, they may, however, also be provided on only one of the opposing side edge pair.

The elements 7 and 8 of the panel connector 9 comprise projections 7a and 8a worked out of the panel and covering each other, as well as a spring element 7b with an abutment surface 7c at the element 7 as well as a corresponding recess 8b with an abutment surface 8c on the element 8. The spring element 7b consists of an aluminum profile, which is fixed with an attachment clip 7d in two recesses formed on the bottom surface 4a, wherein one of the recesses is located underneath the projection 7a. The abutment surface 7c is formed by a bulge. The recess 8b is also formed in the bottom surface 4a and accommodates the bulge.

As may be seen from Fig. 1 to 3, the bottom surface 4a of the panel 1 is substantially covered by a heating material 10, wherein the heating material 10 contains a heating means 11 in the form of a conventional resistance heating foil (preferably a 48 Volt system), said heating means directly contacting the bottom surface 4a. "Substantially covered" means that for instance the heating foil 11 is applied across a major part of the bottom surface 4a, but the panel connectors 9 are left free to such an extent that a connection of the panels 1 to form a surface compound is not prevented.

The heating foil 11 is laminated fully onto a backing layer 12 which is fixedly connected to the heating foil 11 on the side opposite the floor surface 4a and which also substantially covers the heating foil. The backing 12 may either be used as a pure protective layer for the heating foil 11 or it may additionally consist of a sound and/or heat insulating material so that the backing 12 contributes to the function of the floor panel 1 and of the heating material 10, respectively.

Fig. 4 shows a section of a heating material 10, which consists of the heating foil 11 and of the backing 12 fixedly connected to the heating foil 11. The heating foil 11 comprises a plurality of heating wires 13 that are in parallel to each other, said heating wires being embedded in a non-conductive matrix material.

In order to connect the individual heating wires 13 with one another, a strip-shaped electrical conductor 14 (Fig. 2) is applied transversely to the extension of the heating wires 13 and also covering these heating wires. This electrical conductor may for instance be a strip made of sheet copper.

In the embodiment show, the heating wires 13 extend in parallel to the short edges 5a, 5b and extend from a long edge 6a up to the opposite long edge 6b. The strip-shaped conductors 14 are connected to the heating wires 13 along both long edges 6a, 6b and in the proximity thereof. Pockets 15 are formed in the region of the short side edges 5a, 5b between each conductor 14 and the heating wires 13, said pockets being able to receive a plug element 16 of a heating connection 17.

The strip-shaped conductors 14 can be replaced in function by parts of the snap or latch connectors 9 which are made of a conductive material and are extending along the heating foil 11 essentially perpendicular to the wires 13. Especially, the entire element 7 or its spring element 7b or the attachment clip 7d can provide electrical connection between the wires 13 and pockets 15.

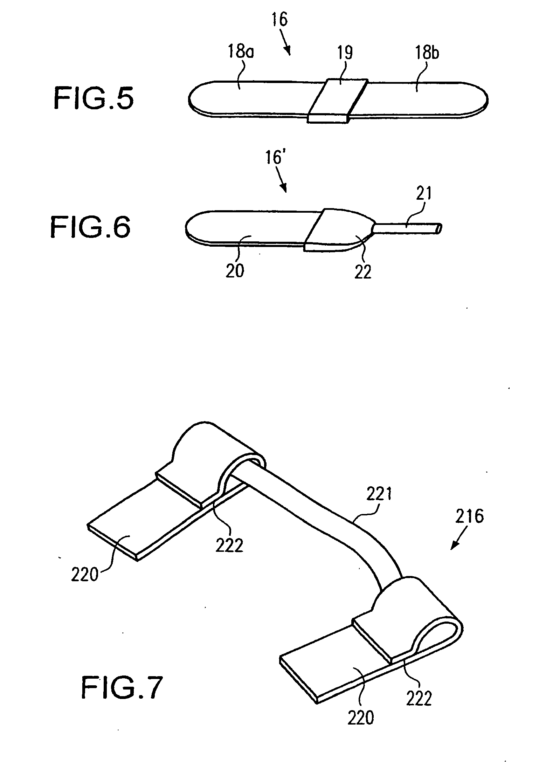

As shown in Fig. 5, a first type of plug elements 16 consists of a tongue-shaped strip of a bendable conductor material, preferably of a copper sheet, which is formed as an electrical contact 18a, 18b on both ends, which are in electrical connection with one another. An elevation 19 is provided between the contact ends 18a, 18b which serves as an abutment for limiting the insertion depth of the plug element 16 into the pocket 15.

The plug element 16 serves for connecting two floor panels 1, which are arranged in the interior of a surface composite and which oppose each other with their short side edges 5a, 5b.

A second embodiment of a plug element 116 according to Fig. 6 includes a tongue-shaped conductor strip, particularly made of copper sheet, which, however, comprises one single contact end 20 only. An electrical connection line 21 is attached at this contact end 20 via a column 22, wherein the column 22 serves as an abutment for limiting the insertion depth of the contact end 20. The other end of line 21 is similarly attached to a second contact end via a second column or is provided with a plug for connection with further elements (not shown), for instance a power source, themostatic switches or other control elements or the like.

The plug element 116 serves for an electrical connection of two floor panels 1 in the edge portion, which oppose each other with their long side edges 6a, 6b.

A third embodiment of a plug element 216 is shown in Fig. 7. This plug element 216 is easier to manufacture but otherwise similar to the element 116. Two contact ends 220 are connected by an electrical connection line 221. The contact ends 220 are formed by strips of a flexible material and are folded around conductive ends of the line 221 by forming stops 222 for limiting the degree of inserting into the pockets 15.

Each of the floor panels 1, which is required for a surface compound of the desired size, is first of all provided on one of its short sides 5a, 5b with a plug element 16 for each pocket 15 each, in that this plug element 16 is inserted into the pocket 15 until the abutment 19, as is shown in Fig. 2. However, it is also possible to provide the floor panels 1 still in the factory with the plug elements 16 and to fold same, so that they are not an obstacle during transport.

For laying the floor panels 1, they are usually assembled by means of snap or latch panel connectors 9. For laying, the floor panel 1 with its projection 8a is pressed as in a groove and tongue connection obliquely underneath the projection 7a of a floor panel 1 already lying on the floor, whereby the spring element 7b diverges resiliently and if both floor panels are pressed together to a sufficient extent, snaps back into the recess 8b, wherein the abutment surfaces 7c and 8c engage each other and draw both floor panels towards each other.

The plug element 16 projects, as Fig. 3 shows, with its contact end 18b over the projection 7a and in particular also over the spring element 7b, so that, supported by its flexibility, it can be threaded into the still empty pocket on the front side 5b of the following floor panel 1 before the snap and latch connection snaps in. In this manner, an electrical connection between the heating foil 11 of adjoining floor panels 1 is established.

On the margin of the floor covering a plug element 116 or 216 with its contact end 20 or 220 is inserted into the pockets 15 of the floor panels 1 that are open towards the short side edges 5a and 5b, respectively, said contact ends being connected to each other via the electrical line 21 or 221. In this manner is an electrical connection between adjoining rows of floor panels 1 established. The plug elements 116, 216 can be adapted to a modified electrical connection of the wires 13 in parallel by arranging a plurality (i.e. more than two) of the plug elements 116, 216 on one connection line 21, 221, and provide by this modified connection line electrical connection of adjacent panels 1 within the floor covering at the margins thereof.

The heating material 10, consisting of an electrical resistance heating foil 11, which was laminated onto a backing 12, is also suitable for being used with other types of floor panels, wherein this heating element (e.g. according to Fig. 4) can be laid in webs and can be provided at suitable locations with a conductor 14, and wherein the connection of the webs can be made via the pockets and plug elements, which were described above.

In deviation to the described and drawn embodiments, the creation according to the present invention can also be used in any type of floor panel, e.g. also in solid wood panels, and/or in panels of different shapes, e.g. square panels, and/or panels adapted to different kind of laying, e.g. panels for glued joints. The heating material does not have to be applied onto the entire surface on the floor surface of each panel but it may also cover parts thereof or it may also be provided in certain floor panels in the surface compound. The panel connectors may have any suitable shape or may be shaped differently at the short and long side edges. Instead of providing the pockets on the short side edges, the opposing, long side edges may also be provided with these pockets so that the electrical connection is implemented transversely to the longitudinal extension of the floor panels.

## Claims

1. A floor panel (1) in particular made of laminate, having side edges (5, 6) which are adapted to be connected to further panels to form a floor covering, a core (3), an upper tread surface (2a) on one side of the core (3), a bottom surface (4a) on the opposite side of the core (3), a heating means (11) fixedly arranged on the panel (1), and a heating connection (17) on at least one of the side edges (5, 6), **characterized in that** the heating means (11) is arranged on the bottom surface (4a) at the lower side of the core (3) opposite the tread surface (2a).

2. A floor panel as claimed in claim 1, **characterized in that** the heating means (11) is arranged between the bottom surface (4a) and a backing (12).

3. A floor panel as claimed in claim 2, **characterized in that** the backing (12) is a sound and/or heat insulating material.

4. A floor panel as claimed in one of claims 1 to 3, **characterized in that** the heating means (11) substantially covers the bottom surface (4a).

5. A floor panel as claimed in one of claims 2 to 4, **characterized in that** the backing (12) substantially covers the heating means (11).

6. A floor panel as claimed in one of claims 1 to 5, **characterized in that** the heating means (11) is an electric resistance heating foil.

7. A floor panel as claimed in one of claims 1 to 6, **characterized in that** the heating connection (17) includes at least one plug element (16, 116, 216) of an electrically conductive material, which is detachably receivable in a pocket (15) of the heating means (11) open towards a side edge (5, 6).

8. A floor panel as claimed in claim 7, **characterized in that** at least one pocket (15) for receiving a plug element (16, 116, 216) is provided on opposing side edges (5a, 5b).

9. A floor panel as claimed in claim 7 or 8, **characterized in that** the plug element (16, 116, 216) consists of a flexible conductive material.

10. A floor panel as claimed in one of claims 7 to 9, **characterized in that** the plug element (16,116, 216) includes a strip-shaped, flat tongue.

11. A floor panel as claimed in one of claims 7 to 10, **characterized in that** the electric heating foil (11) includes a plurality of parallel heating wires (13) and at least one strip-shaped conductor (14) connecting the heating wires, wherein the pocket (15) is provided between the conductor (14) and the heating wires (13).

12. A floor panel as claimed in one of claims 7 to 11, **characterized in that** an abutment (19, 22) is formed on the plug element (16, 116, 216).

13. A floor panel as claimed in one of claims 7 to 12, **characterized in that** two contact ends (18a, 18b, 220) of the plug element (16, 216) are formed for being inserted into a pocket (15).

14. A floor panel as claimed in one of claims 7 to 12, **characterized in that** a contact end (20) of the plug element (116) is formed for being inserted into a pocket (15) and the other end is provided with a connection line (21).

15. A floor panel as claimed in one of claims 1 to 14, **characterized in that** at least two opposing side edges (5a, 5b) of the panel (1) are provided with elements (7, 8) of a snap or latch connection.

16. A floor panel as claimed in one of claims 1 to 15, **characterized in that** the heating connection (17) is provided on two opposing side edges (5a, 5b).

17. A floor panel as claimed in one of claims 1 to 16, **characterized by** a laminate structure with a tread layer (2), a core layer (3) and elements (7, 8) of a panel connection (9) provided on all side edges (5, 6).

18. A floor panel as claimed in at least one of claims 1 to 17, **characterized by** a rectangular shape with two short side edges (5a, 5b) and two long side edges (6a, 6b), a heating foil (11) fixedly connected to the bottom surface (4a), said heating foil substantially covering the bottom surface (4a), a backing (12) substantially covering the heating foil (11) and at least one pocket (15) on each of the short side edges (5a, 5b) for receiving a plug element (16,16') of the heating connection (17).

## Patentansprüche

1. Bodenpaneel (1), insbesondere aus Laminat, mit Seitenkanten (5, 6), die zum Verbinden mit weiteren Paneelen zur Erstellung eines Bodenbelags ausgebildet sind, einem Kern (3), einer oberen Trittfläche (2a) an einer Seite des Kerns (3), einer Bodenfläche (4a) auf der gegenüberliegenden Seite des Kerns (3), einer am Paneel (1) fest angeordneten Heizeinrichtung (11), sowie mit einer Heizungsverbindung (17) an wenigstens einer der Seitenkanten (5, 6), **dadurch gekennzeichnet, dass** die Heizeinrichtung (11) an der Bodenfläche (4a) an der unteren Seite des Kerns (3), der Trittfläche (2a) gegenüberliegend, angeordnet ist.

2. Bodenpaneel nach Anspruch 1, **dadurch gekennzeichnet, dass** die Heizungseinrichtung (11) zwischen der Bodenfläche (4a) und einer Unterlage (12) angeordnet ist.

3. Bodenpaneel nach Anspruch 2, **dadurch gekennzeichnet, dass** die Unterlage (12) ein Schall- und/oder Wärmedämmmaterial ist.

4. Bodenpaneel nach einem der Ansprüche 1 bis 3, **dadurch gekennzeichnet, dass** die Heizungseinrichtung (11) die Bodenfläche (4a) im Wesentlichen überdeckt.

5. Bodenpaneel nach einem der Ansprüche 2 bis 4, **dadurch gekennzeichnet, dass** die Unterlage (12) die Heizeinrichtung (11) im Wesentlichen überdeckt.

6. Bodenpaneel nach einem der Ansprüche 1 bis 5, **dadurch gekennzeichnet, dass** die Heizeinrichtung (11) eine elektrische Widerstands-Heizfolie ist.

7. Bodenpaneel nach einem der Ansprüche 1 bis 6, **dadurch gekennzeichnet, dass** die Heizungsverbindung (17) wenigstens ein Steckteil (16, 16') aus elektrisch leitendem Material enthält, das in einer zu einer Seitenkante (5, 6) hin offenen Tasche (15) der Heizeinrichtung (11) lösbar aufnehmbar ist.

8. Bodenpaneel nach Anspruch 7, **dadurch gekennzeichnet, dass** an einander gegenüberliegenden Seitenkanten (5a, 5b) jeweils wenigstens eine Tasche (15) zum Aufnehmen eines Steckteils (16, 16') vorgesehen ist.

9. Bodenpaneel nach Anspruch 7 oder 8, **dadurch gekennzeichnet, dass** das Steckteil (16, 16') aus einem biegbaren, leitenden Material besteht.

10. Bodenpaneel nach einem der Ansprüche 7 bis 9, **dadurch gekennzeichnet, dass** das Steckteil (16, 16') eine streifenförmige, flache Zunge enthält.

11. Bodenpaneel nach einem der Ansprüche 7 bis 10, **dadurch gekennzeichnet, dass** die elektrische Heizfolie (11) eine Vielzahl paralleler Heizdrähte (13) und wenigstens einen, diese verbindenden, streifenförmigen Leiter (14) enthält, wobei die Tasche (15) zwischen dem Leiter (14) und den Heizdrähten (13) vorgesehen ist.

12. Bodenpaneel nach einem der Ansprüche 7 bis 11, **dadurch gekennzeichnet, dass** am Steckteil (16, 16') ein Anschlag (19, 22) vorgesehen ist.

13. Bodenpaneel nach einem der Ansprüche 7 bis 12, **dadurch gekennzeichnet, dass** zwei Kontaktenden (18a, 18b) des Steckteils (16) zum Einsetzen in jeweils eine Tasche (15) ausgebildet sind.

14. Bodenpaneel nach einem der Ansprüche 7 bis 12, **dadurch gekennzeichnet, dass** ein Kontaktende (20) des Steckteils (16') zum Einsetzen in eine Tasche (15) ausgebildet und das andere Ende mit einer Verbindungsleitung (21) versehen ist.

15. Bodenpaneel nach einem der Ansprüche 1 bis 14, **dadurch gekennzeichnet, dass** an wenigstens zwei gegenüberliegenden Seitenkanten (5a, 5b) des Paneels (1) Elemente (7, 8) einer Schnapp- oder Rastverbindung vorgesehen sind.

16. Bodenpaneel nach einem der Ansprüche 1 bis 15, **dadurch gekennzeichnet, dass** die Heizungsverbindung (17) an zwei gegenüberliegenden Seitenkanten (5a, 5b) vorgesehen ist.

17. Bodenpaneel nach einem der Ansprüche 1 bis 16, **gekennzeichnet durch** einen Laminataufbau mit einer Trittschicht (2), einer Kernschicht (3) und mit an allen Seitenkanten (5, 6) vorgesehenen Elementen (7, 8) einer Paneelverbindung (9).

18. Bodenpaneel nach einem der Ansprüche 1 bis 17, **gekennzeichnet durch** eine rechteckige Form mit zwei kurzen Seitenkanten (5a, 5b) und zwei langen Seitenkanten (6a, 6b), einer mit der Bodenfläche (4a) fest verbundenen Heizfolie (11), die die Bodenfläche (4a) im Wesentlichen überdeckt, einer die Heizfolie (11) im Wesentlichen überdeckenden Unterlage (12) und wenigstens einer Tasche (15) an jeder der kurzen Seitenkanten (5a, 5b) zur Aufnahme eines Steckteils (16, 16') der Heizungsverbindung (17).

## Revendications

1. Panneau de sol (1) réalisé notamment en stratifié, comportant des bords latéraux (5, 6) lesquels sont conçus pour être reliés à d'autres panneaux afin de former un revêtement de sol, une âme (3), une surface de marche supérieure (2a) d'un côté de l'âme (3), une surface inférieure (4a) de l'autre côté de l'âme (3), un moyen de chauffage (11) disposé de façon fixe sur le panneau (1), et une connexion de chauffage (17) sur l'un au moins des bords latéraux (5, 6), **caractérisé en ce que** le moyen de chauffage (11) est disposé sur la surface inférieure (4a) au niveau du côté inférieur de l'âme (3) en regard de la surface de marche (2a).

2. Panneau de sol selon la revendication 1, **caractérisé en ce que** le moyen de chauffage (11) est disposé entre la surface inférieure (4a) et un support (12).

3. Panneau de sol selon la revendication 2, **caractérisé en ce que** le support (12) est un matériau d'isolation acoustique et/ou thermique.

4. Panneau de sol selon l'une des revendications 1 à 3, **caractérisé en ce que** le moyen de chauffage (11) recouvre sensiblement la surface inférieure (4a).

5. Panneau de sol selon l'une des revendications 2 à 4, **caractérisé en ce que** le support (12) recouvre sensiblement le moyen de chauffage (11).

6. Panneau de sol selon l'une des revendications 1 à 5, **caractérisé en ce que** le moyen de chauffage (11) est une feuille de chauffage par résistance électrique.

7. Panneau de sol selon l'une des revendications 1 à 6, **caractérisé en ce que** la connexion de chauffage (17) comprend au moins un élément formant fiche (16, 116, 216) en un matériau électriquement conducteur, qui est apte à être reçu de façon amovible dans une poche (15) du moyen de chauffage (11) s'ouvrant en direction d'un bord latéral (5, 6).

8. Panneau de sol selon la revendication 7, **caractérisé en ce que** ladite poche (15) servant à recevoir un élément formant fiche (16, 116, 216) est prévue sur des bords latéraux opposés (5a, 5b).

9. Panneau de sol selon la revendication 7 ou 8, **caractérisé en ce que** l'élément formant fiche (16, 116, 216) est constitué d'un matériau conducteur flexible.

10. Panneau de sol selon l'une des revendications 7 à 9, **caractérisé en ce que** l'élément formant fiche (16, 116, 216) comprend une languette plate en forme de bande.

11. Panneau de sol selon l'une des revendications 7 à 10, **caractérisé en ce que** la feuille de chauffage électrique (11) comprend plusieurs fils de chauffage parallèles (13) et au moins un conducteur en forme de bande (14) reliant les fils de chauffage, la poche (15) étant prévue entre le conducteur (14) et les fils de chauffage (13).

12. Panneau de sol selon l'une des revendications 7 à 11, **caractérisé en** en ce qu'une butée (19, 22) est formée sur l'élément formant fiche (16, 116,216).

13. Panneau de sol selon l'une des revendications 7 à 12, **caractérisé en ce que** deux extrémités de contact (18a, 18b, 220) de l'élément formant fiche (16, 216) sont formées en vue d'être insérées à l'intérieur d'une poche (15).

14. Panneau de sol selon l'une des revendications 7 à 12, **caractérisé en ce qu'**une extrémité de contact (20) de l'élément formant fiche (116) est formée en vue d'être insérée dans une poche (15) et l'autre extrémité est pourvue d'une ligne de connexion (21).

15. Panneau de sol selon l'une des revendications 1 à 14, **caractérisé en ce qu'**au moins deux bords latéraux opposés (5a, 5b) du panneau (1) sont pourvus d'éléments (7, 8) d'une connexion par encliquetage ou verrouillage.

16. Panneau de sol selon l'une des revendications 1 à 15, **caractérisé en que** la connexion de chauffage (17) est prévue sur deux bords latéraux opposés (5a, 5b).

17. Panneau de sol selon l'une des revendications 1 à 16, **caractérisé par** une structure stratifiée avec une couche de marche (2), une couche d'âme (3), et des éléments (7, 8) d'une connexion de panneau (9) prévus sur tous les bords latéraux (5, 6).

18. Panneau de sol selon au moins l'une des revendications 1 à 17, **caractérisé en ce qu'**il présente une forme rectangulaire avec deux bords latéraux courts (5a, 5b) et deux bords latéraux longs (6a, 6b), une feuille de chauffage (11) reliée de façon fixe à la surface inférieure (4a), ladite feuille de chauffage recouvrant sensiblement la surface inférieure (4a), un support (12) recouvrant sensiblement la feuille de chauffage (11), et au moins une poche (15) sur chacun des bords latéraux courts (5a, 5b) pour recevoir un élément formant fiche (16, 16') de la connexion de chauffage (17).
